# FASCICULE DE BREVET EUROPEEN

(11) **EP 2 640 981 B1**
(45) Date de publication et mention de la délivrance du brevet: **22.10.2014**
(21) Numéro de dépôt: 11796736.4
(22) Date de dépôt: 08.11.2011
(51) Int. Cl.: F15B 15/28

(54) **VANNE**
VENTIL
VALVE

(30) Priorité: 18.11.2010 FR 1059478
(43) Date de publication de la demande: 25.09.2013
(73) Titulaire: Snecma, 75015 Paris (FR)
(72) Inventeur: GIANNOTTA, Salvatore, F-77550 Moissy Cramayel Cedex (FR)
(74) Mandataire: Jolly, Christophe
(86) Numéro de dépôt international: PCT/FR2011/052607
(87) Numéro de publication internationale: WO 2012/066216

(56) Documents cités:
- WO-A1-2010/022746
- DE-B- 1 117 960
- FR-A1- 2 794 196

## Description

L'invention concerne une vanne et en particulier une vanne de commande d'un jeu en sommet d'aube de turbine, ainsi qu'une turbomachine équipée d'une telle vanne.

De manière classique, l'air alimentant une turbomachine s'écoule d'amont en aval à travers un compresseur basse et haute pression, puis à l'intérieur d'une chambre de combustion dont la sortie alimente une turbine haute pression qui entraîne le compresseur haute pression puis une turbine basse pression qui entraîne le compresseur basse pression.

La turbine haute pression comprend en général une roue à aubes mobiles située entre deux rangées annulaires d'aubes fixes amont et aval portées par un carter externe, un jeu radial faible étant prévu entre les sommets des aubes mobiles et le carter externe.

Lors du fonctionnement de la turbomachine, il est important de minimiser le jeu radial en sommet d'aubes de la turbine pour éviter les fuites d'air et garantir une performance maximale de la turbomachine.

On connaît des dispositifs de pilotage des jeux en sommet d'aubes, qui comprennent des moyens de prélèvement d'air de refroidissement dans une partie du compresseur haute pression. Un circuit de prélèvement d'air s'étend jusqu'à la turbine et se divise en deux conduites dont une première alimente une cavité annulaire amont entourant un carter externe de la turbine haute pression et une seconde alimente une cavité aval entourant une rangée d'aubes fixes en sortie de la turbine haute pression. Les aubes de cette dernière rangée comprennent des canaux reliés en entrée à la cavité aval et débouchant en sortie au niveau du bord de fuite des aubes.

Un clapet est monté dans le circuit de prélèvement d'air et peut prendre une position ouverte dans laquelle l'air circule dans la première conduite, la seconde conduite étant obturée par le clapet, et une position fermée dans laquelle l'air circule dans la seconde conduite, la première conduite étant obturée. Les deux cavités précitées communiquent l'une avec l'autre de sorte que lorsque le clapet est ouvert, l'air issu du compresseur haute pression permet un refroidissement du carter externe de la turbine haute pression et induit une mise sous pression de la cavité aval du carter externe de la turbine basse pression. Lorsque le clapet est en position fermée, une partie de l'air circule depuis la cavité aval vers la cavité amont pour la mise sous pression de celle-ci.

Avec un tel montage, il est possible de contrôler l'alimentation en air de refroidissement du carter externe de la turbine haute pression et ainsi de contrôler sa dilatation thermique et par suite les jeux en sommets d'aubes.

Il peut arriver que le clapet ou son circuit de commande se bloque, ce qui peut entraîner soit une surconsommation de carburant du fait d'un jeu important en sommet d'aubes si le clapet se bloque en position fermée soit une usure prématurée des sommets d'aubes et du carter entrant ensemble en contact du fait d'un refroidissement excessif du carter lorsque le clapet est bloqué en position ouverte. Ainsi, pour garantir un contrôle optimal des jeux en sommet d'aubes de turbine, il est nécessaire de connaître la position du clapet.

Toutefois, dans ce montage connu, les faces amont et aval du clapet sont toujours soumises à la pression de l'air issu du compresseur haute pression puisque les deux cavités amont et aval communiquent l'une avec l'autre, de sorte que la détection de la position du clapet par une simple mesure différentielle de pression entre les faces amont et aval du clapet n'est pas possible.

De façon connue, le clapet se présente sous la forme d'un papillon dont l'ouverture et la fermeture sont commandées par l'intermédiaire d'une servovalve agencée dans un circuit de carburant. La position du papillon est déterminée au moyen de capteurs de position du type LVDT (de l'anglais « linear variable differential transformer ») permettant de déterminer la position du papillon. Le degré d'ouverture du papillon est commandé par un calculateur de la turbomachine.

Ce type de commande est toutefois difficile à mettre en oeuvre du fait que le contrôle du degré d'ouverture du papillon requiert un développement logiciel spécifique. De plus, les capteurs LVDT sont coûteux. Enfin, l'utilisation d'un circuit hydraulique de carburant impose la mise en place d'une tuyauterie complexe de dérivation pour l'amenée de carburant jusqu'à la servovalve ainsi que l'utilisation de joints d'étanchéité onéreux. WO 2010/022 746 décrit un moyen de détection de la position du piston nécessitant 3 capteurs.

L'invention a notamment pour but d'apporter une solution simple, efficace et économique à ce problème.

A cette fin, elle propose une vanne comprenant un piston monté coulissant dans un corps creux, une tige solidaire du piston et destinée à être reliée à un organe mobile, des moyens d'alimentation du corps creux en fluide sous pression pour le déplacement du piston dans le corps creux entre une position initiale et une position finale et des moyens de rappel du piston en position initiale lorsque la pression en fluide est inférieure à une pression donnée, comprenant des moyens de détection de la position du piston, caractérisé en ce que ces moyens de détection comprennent un élément obturateur solidaire en déplacement du piston et monté mobile dans une conduite de fluide entre deux positions d'ouverture et de fermeture de la conduite de fluide, celle-ci étant reliée par une extrémité aux moyens d'alimentation du corps creux en fluide sous pression et par une autre extrémité à un capteur de pression générant un signal de sortie représentatif de la position du piston de la vanne.

Selon l'invention, le déplacement du piston induit un déplacement simultané de l'élément obturateur lequel permet une ouverture ou une fermeture d'une conduite de fluide, la pression de fluide en sortie de la conduite étant détectée par un capteur de pression qui permet ainsi de rendre compte de la position de l'élément obturateur et donc du piston. De cette manière, lorsque la tige de piston est reliée par exemple à un organe mobile d'ouverture et de fermeture d'une alimentation en air pour le contrôle des jeux en sommets d'aubes dans une turbine, on peut déduire la position de l'organe mobile à partir de celle du piston.

La vanne selon l'invention est particulièrement intéressante lorsqu'elle est appliquée à la commande d'un jeu en sommet d'aubes de turbine dans une turbomachine.

L'intégration d'un élément obturateur dans une conduite reliée à une source de pression permet d'éviter l'utilisation de capteurs LVDT coûteux puisque la détection est réalisée par la mesure d'une pression.

Selon une autre caractéristique de l'invention, la vanne comprend une chambre contenant une tige reliée rigidement au piston de la vanne et s'étendant coaxialement à ce piston, la chambre ayant un orifice d'entrée relié aux moyens d'alimentation en fluide sous pression et un orifice de sortie masqué par la tige quand le piston est en position initiale et démasqué quand le piston est en position finale, l'orifice de sortie étant relié au capteur de pression.

Dans cette configuration, la tige bloque l'application de la pression vers le capteur de pression tant qu'elle obture l'orifice de sortie de la conduite. Lorsque la tige ouvre la conduite, le capteur de pression détecte une augmentation de la pression de fluide, ce qui permet de savoir que le piston se trouve en position finale.

Dans un mode de réalisation de l'invention, la tige contenue dans la chambre s'étend depuis le piston à l'opposé de la tige relié à l'organe mobile.

Dans une variante de l'invention, la tige contenue dans la chambre est la tige reliée à l'organe mobile et porte un élément obturateur précité formé par une collerette annulaire de la tige à l'intérieur de la chambre, ce qui permet ainsi d'utiliser la tige du piston comme support de l'élément obturateur et évite le montage d'une tige supplémentaire sur le piston.

Avantageusement, la chambre est à l'extérieur du corps creux contenant le piston et est portée par une paroi de fond du corps creux.

Dans une autre variante de l'invention, la conduite de fluide comprend le corps creux dont le piston forme un élément de séparation étanche entre un orifice du corps creux relié aux moyens d'alimentation en fluide sous pression et un orifice du corps creux relié au capteur de pression, ces deux orifices du corps creux étant reliés l'un à l'autre quand le piston est au voisinage de sa position finale.

L'invention concerne également une turbomachine, telle qu'un turboréacteur d'avion, caractérisée en ce qu'elle comprend au moins une vanne telle que décrite ci-dessus.

Dans cette turbomachine, les moyens d'alimentation sont reliés à des moyens de prélèvement d'air sous pression sur un étage d'un compresseur, par exemple haute pression, et le capteur de pression est positionné au voisinage d'une soufflante à l'extrémité amont de la turbomachine.

Le fluide sous pression qui alimente la vanne est ainsi de l'air prélevé dans le compresseur de la turbomachine ce qui évite la dérivation d'une partie du carburant sous pression pour l'alimentation de la vanne ainsi que l'utilisation de joints d'étanchéité spéciaux comme dans la technique antérieure. Enfin, l'intégration du capteur de pression au voisinage de la soufflante évite que celui-ci ne soit soumis à des températures élevées qui pourraient affecter son fonctionnement.

L'invention concerne encore une procédure de détection du blocage du piston dans une vanne telle que décrite précédemment, caractérisée en ce qu'elle comprend les étapes consistant à :
a) alimenter le corps creux en fluide à une pression inférieure à la pression donnée de déplacement du piston ;
b) comparer la valeur de pression mesurée par le capteur à la pression d'alimentation du corps creux et en déduire si le piston est bloqué en position d'ouverture ;
c) si la pression mesurée par le capteur est nulle, augmenter la pression d'alimentation du corps creux au moins jusqu'à la pression donnée de déplacement du piston ;
d) comparer la nouvelle valeur de pression mesurée par le capteur de pression à la pression d'alimentation du corps creux et en déduire si le piston est bloqué en position de fermeture.

Dans le cas où la pression mesurée par le capteur de pression lors de l'étape b) est égale à la pression d'alimentation du corps creux qui est inférieure à la pression de déplacement du piston, cela signifie que l'entrée et la sortie de la conduite communiquent et que le piston est bloqué en position d'ouverture. Dans le cas contraire, la pression mesurée par le capteur de pression est nulle et on augmente la pression jusqu'à la pression de déplacement du piston. Si la pression mesurée par le capteur de pression reste nulle, on en déduit que le piston est bloqué en fermeture. Dans le cas contraire, le piston indique une pression égale à la pression d'alimentation du corps creux, ce qui permet de déduire que le piston fonctionne normalement.

D'autres avantages et caractéristiques de l'invention apparaîtront à la lecture de la description suivante faite à titre d'exemple non limitatif et en référence aux dessins annexés dans lesquels :
- la figure 1 est une vue schématique de côté d'une turbomachine d'un type connu ;
- la figure 2 est une demi-vue schématique en coupe axiale de la partie aval de la turbomachine de la figure 1 ;
- les figures 3a et 3b sont des vues schématiques d'une vanne selon l'invention en position ouverte et fermée, respectivement ;
- les figures 4a et 4b sont des vues schématiques d'une seconde réalisation de l'invention en position ouverte et fermée, respectivement ;
- les figures 5a et 5b sont des vues schématiques d'une troisième réalisation de l'invention en position ouverte et fermée, respectivement.

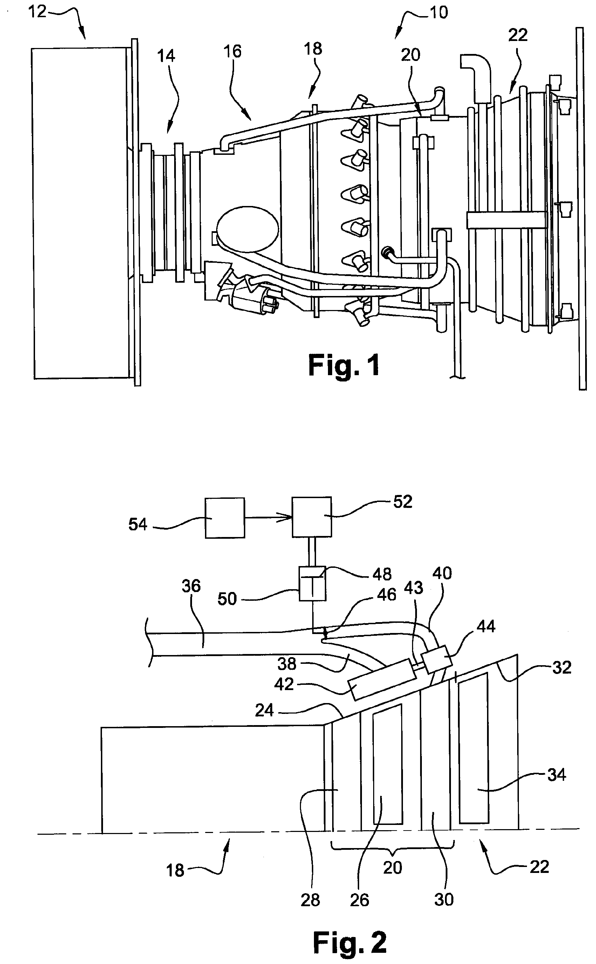

On se réfère tout d'abord à la figure 1 qui représente une turbomachine 10 comprenant essentiellement d'amont en aval une soufflante 12 fournissant un flux d'air divisé en un flux d'air secondaire contournant le turboréacteur et en un flux d'air primaire circulant à l'intérieur d'un compresseur basse pression 14 puis d'un compresseur haute pression 16 et alimentant une chambre de combustion 18. Les gaz produits lors de la combustion sont éjectés dans une turbine haute pression 20 dont le rotor entraîne le rotor du compresseur haute pression. Le gaz chauds circulent ensuite dans une turbine basse pression 22 dont le rotor entraîne le rotor du compresseur basse pression.

Comme représenté en figure 2, la turbine haute pression 20 est agencée en sortie de la chambre de combustion 18 et comprend un carter externe 24 définissant extérieurement la veine d'écoulement des gaz de combustion dans laquelle tourne une roue à aubes 26 montée entre un distributeur à aubes fixes amont 28 et un distributeur aval 30. La turbine basse pression 22 comporte un carter externe 32 entourant une alternance de distributeurs et de roues de turbine dont seule la première roue 34 est visible sur la figure 2.

La turbomachine comprend des moyens de pilotage des jeux au sommet des aubes de la turbine haute pression. Ces moyens comprennent des moyens de prélèvement d'air sur le compresseur haute pression, comportant une conduite 36 dont l'extrémité amont est reliée à un étage du compresseur haute pression et dont l'extrémité aval se divise en deux canaux 38, 40 alimentant des cavités annulaires amont 42 et aval 44 formées autour du carter externe 24 de la turbine haute pression. La cavité aval alimente des canaux (non représentés) formés dans les aubes fixes du distributeur 30, ces canaux débouchant en sortie au niveau du bord de fuite des aubes fixes. Ces canaux permettent un refroidissement des aubes du distributeur 30 soumis au gaz chauds issus de la chambre de combustion. Les moyens de pilotage comprennent également un clapet 46 commandé à déplacement entre des positions d'ouverture et de fermeture par un piston 48 monté à coulissement dans un corps creux 50 alimenté en fluide sous pression par un circuit de carburant dérivé du circuit de carburant alimentant la chambre de combustion de manière bien connue de l'homme du métier. L'alimentation en fluide sous pression du corps creux est réalisée par l'intermédiaire d'une servovalve 52 commandée par un calculateur 54.

La position ouverte du clapet 46 correspond à une position dans laquelle l'air en provenance du compresseur haute pression est dirigé vers la cavité annulaire 42 autour du carter externe 24 de la turbine haute pression 20 et la position fermée correspond à une position dans laquelle l'air circule vers la cavité annulaire 44.

Les deux cavités 42, 44 communiquent l'une avec l'autre via un canal 43, pour la mise sous pression de la cavité aval par l'intermédiaire de la cavité amont lorsque le clapet est en position ouverte et pour la mise sous pression de la cavité amont par l'intermédiaire de la cavité aval lorsque le clapet est en position fermée.

En fonction des phases de vol, le calculateur 54 commande l'ouverture ou la fermeture de la servovalve 52 laquelle commande le déplacement du piston 48 et par suite du clapet 46. Ainsi, cet agencement permet ou non une alimentation en air de la cavité annulaire 42 formée autour du carter externe 24 de la turbine haute pression 20 pour refroidir plus ou moins le carter externe et ainsi contrôler les jeux en sommets d'aubes de turbine haute pression.

La position du clapet 46 est déterminée par des capteurs de déplacement du type LVDT.

Toutefois, les capteurs LVDT sont très coûteux et l'installation d'un circuit de dérivation de carburant pour alimenter en pression le piston 48 est délicate à réaliser. De plus, la différence de pression entre les faces amont et aval du clapet 46 est sensiblement identique que le clapet soit en position ouverte ou en position fermée du fait que les cavités amont et aval communiquent l'une avec l'autre, ce qui ne permet pas d'envisager une détection de la position du clapet par mesure différentielle des pressions entre les faces amont et aval du clapet 46.

L'invention apporte une solution à ces problèmes ainsi qu'à ceux mentionnés précédemment en utilisant une vanne tout ou rien commandée par de l'air sous pression et intégrant des moyens de détection de la position du piston.

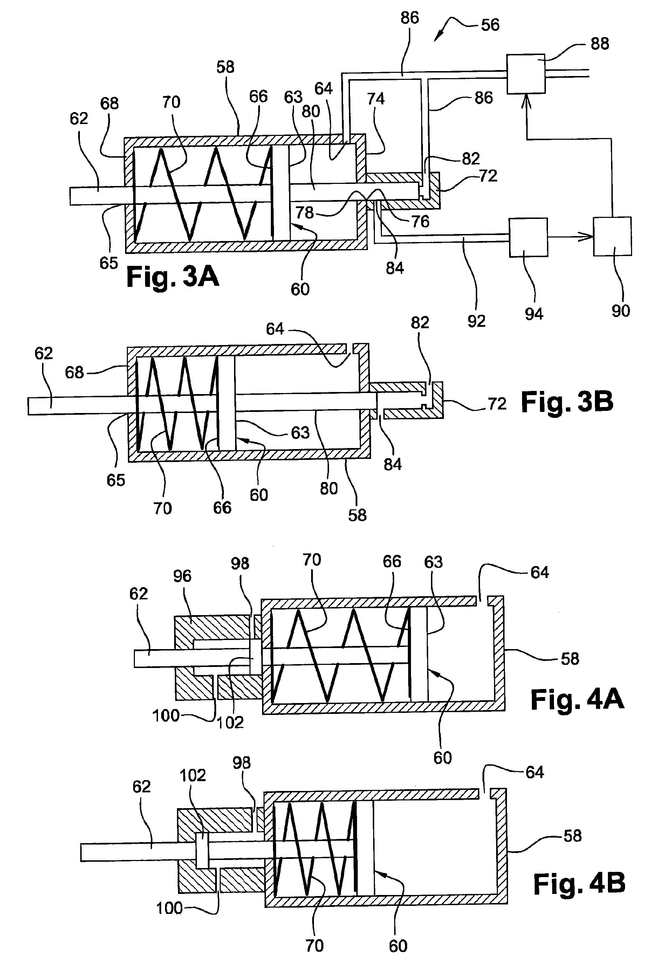

Ainsi, la vanne 56 selon l'invention est une vanne du type tout ou rien qui comprend un corps creux 58 à l'intérieur duquel est monté à coulissement un piston 60 relié à une tige axiale 62 laquelle s'étend à travers un orifice 65 d'une paroi de fond du corps 58. La tige est reliée à un clapet tel que décrit précédemment qui ouvre dans une position initiale du piston 60 (figure 3A) et qui ferme dans une position finale du piston 60 (figure 3B), un conduit relié aux moyens de prélèvement d'air sur un étage du compresseur haute-pression. Le corps creux 58 comporte un orifice d'entrée 64 de fluide sous pression débouchant à l'intérieur du corps creux 58 du côté d'une face amont 63 du piston 60 opposée à la face aval 66 reliée à la tige 62.

Des moyens de rappel du piston en position initiale sont agencés entre la face aval 66 du piston 60 et la paroi de fond 68 du corps creux 58 comportant l'orifice de passage 65 de la tige 62.

Dans les réalisations représentées aux dessins, les moyens de rappel comprennent un ressort 70 travaillant en compression. Ce ressort 70 est en position détendue lorsque le piston 60 est en position initiale (figure 3A). La raideur du ressort 70 est déterminée pour permettre un rappel du piston 60 en position initiale (figure 3A) lorsque la pression en fluide est inférieure à une valeur donnée.

Une chambre 72 à cavité interne cylindrique est montée à l'extérieur du corps creux et est fixée sur la paroi de fond 74 du corps creux 58 du côté opposé à la tige 62. Cette chambre 72 comprend un orifice axial 76 aligné avec un orifice axial 78 de la paroi de fond 74. Une seconde tige 80 à section cylindrique, coaxiale à la tige 62 s'étend à coulissement par une extrémité dans la chambre 72 à travers les orifices 76, 78 du corps creux 58 et de la chambre 72 et est reliée rigidement à la face amont 63 du piston 60 par son extrémité opposée.

La chambre 72 comprend deux orifices radiaux 82, 84 espacés axialement dont l'un 82 est un orifice d'entrée de fluide sous pression et dont l'autre 84 est un orifice de sortie de fluide sous pression. L'extrémité libre de la seconde tige 80 montée à l'intérieur de la chambre 72 obture l'orifice de sortie 84 tant que le piston 60 n'est pas en position finale.

L'orifice 64 du corps creux 58 et l'orifice 82 de la chambre 72 sont reliés par des conduites 86 à une servovalve 88 commandée par un calculateur 90 de la turbomachine. L'orifice de sortie 84 de la chambre 72 est relié par une conduite 92 à un capteur de pression 94 relié au calculateur 90 de la turbomachine.

La servovalve 88 est alimentée en air sous pression prélevé sur le compresseur de la turbomachine.

En fonctionnement, le calculateur 90 commande l'ouverture de la servovalve 88 qui permet une alimentation en air sous pression du corps creux 58. Sous l'effet de la pression, le piston 60 se déplace de la position initiale (figure 3A) à la position finale (figure 3B) et entraîne en déplacement la seconde tige 80 dont l'extrémité libre libère l'orifice de sortie 84 de la chambre 72, de sorte que la pression d'alimentation de la vanne 56 est appliquée au capteur de pression 94 lequel détecte cette pression et transmet une information correspondante au calculateur 90.

Le capteur de pression 94 n'a aucune difficulté à détecter cette pression, qui varie de 0 à 30 bars pour l'alimentation de la vanne 56.

Avantageusement, le capteur 94 est au voisinage de la soufflante 12 de manière à ne pas être soumis à de fortes températures qui pourraient empêcher son fonctionnement.

Dans une variante de réalisation de l'invention représentée aux figures 4A et 4B, une chambre de détection 96 est fixée sur la paroi 68 traversée par la tige 62. La tige 62 traverse la chambre 96 laquelle comprend un orifice radial d'entrée d'air sous pression 98 et un orifice radial de sortie 100 relié au capteur de pression 94. Un élément obturateur 102 de l'orifice de sortie 100 est formé par une collerette annulaire de la tige 62 et est situé à l'intérieur de la chambre 96. La dimension radiale de la collerette annulaire 102 est telle qu'elle coulisse à étanchéité à l'intérieur de la chambre 96. Cette collerette annulaire 102 est positionnée sur la tige 62 de sorte que tant que le piston 60 n'a pas atteint sa position finale, l'application de la pression de fluide au capteur de pression 94 est bloquée.

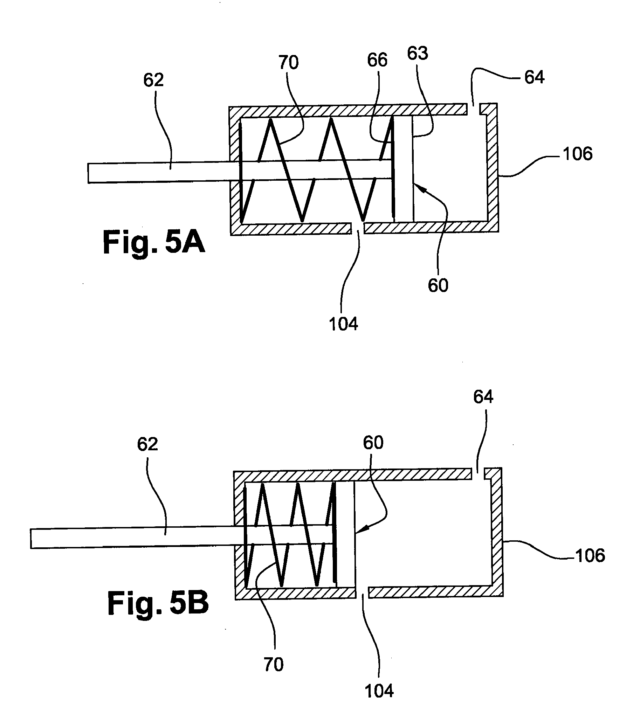

Dans une troisième réalisation de l'invention représentée aux figures 5A et 5B, le corps creux 106 forme la chambre de détection et le piston 60 forme l'élément obturateur de l'application de la pression au capteur de pression. Un orifice radial de sortie 104 relié au capteur est ainsi formé dans le corps creux du côté aval par rapport à l'orifice d'entrée 64 et est décalé axialement par rapport à cet orifice d'entrée d'une distance au plus égale à la course de déplacement du piston 60 dans le corps creux 58. Le piston 60 est ainsi intercalé entre l'orifice d'entrée 64 et l'orifice de sortie 104 en position initiale et dépasse l'orifice de sortie 104 en position finale, qui est alors alimenté en fluide sous pression.

Dans une variante du mode de réalisation de l'invention représenté aux figures 3A et 3B, la seconde tige 80 pourrait comprendre un élément obturateur tel qu'une collerette annulaire, de manière similaire à ce qui a été décrit en référence aux figures 4A et 4B.

Le blocage du clapet ou du piston 60 peut également être détecté de manière simple en mettant en oeuvre une procédure particulière de vérification consistant dans un premier temps à alimenter le corps creux 58, 106 en fluide ayant une pression inférieure à la pression donnée de déplacement du piston 60 de manière à ne pas provoquer de déplacement du piston 60. La valeur de pression mesurée par le capteur 94 est ensuite comparée à la valeur de la pression d'alimentation. Si la valeur mesurée par le capteur 94 est égale à la valeur de la pression d'alimentation, on en déduit que l'entrée 82, 98, 64 et la sortie 84, 100, 104 de la chambre 72, 96, 106 communiquent et que le piston 60 est bloqué en position d'ouverture. Dans le cas contraire, la pression mesurée par le capteur 94 est nulle et le piston 60 est en position de fermeture. Si on augmente alors la pression d'alimentation à une valeur supérieure ou égale à la pression donnée nécessaire au déplacement du piston 60 et si la pression mesurée par le capteur 94 reste nulle, on en déduit que le piston 60 est donc bloqué en position de fermeture.

Cette procédure de vérification de l'état de blocage du piston peut être effectuée au ralenti au sol avant le décollage ou après l'atterrissage.

Si la vanne selon l'invention est particulièrement intéressante lorsqu'elle est utilisée pour la commande des jeux en sommets d'aubes de turbine dans une turbomachine, elle peut aussi être utilisée dans d'autres domaines techniques chaque fois que la position d'un organe mobile actionné par un piston doit être déterminée.

## Revendications

1. Vanne (56) comprenant un piston (60) monté coulissant dans un corps creux (8, 106), une tige (62) solidaire du piston (60) et destinée à être reliée à un organe mobile, des moyens d'alimentation du corps creux en fluide sous pression pour le déplacement du piston (60) dans le corps creux (58) entre une position initiale et une position finale et des moyens de rappel du piston (60) en position initiale lorsque la pression en fluide est inférieure à une pression donnée, comprenant des moyens de détection de la position du piston (60), **caractérisée en ce que** ces moyens de détection comprennent un élément obturateur (80, 102, 60) solidaire en déplacement du piston (60) et monté mobile dans une conduite de fluide entre deux positions d'ouverture et de fermeture, respectivement, la conduite de fluide étant reliée par une extrémité aux moyens d'alimentation du corps creux en fluide sous pression et par une autre extrémité à un capteur de pression (94) générant un signal de sortie représentatif de la position du piston de la vanne.

2. Vanne selon la revendication 1, **caractérisée en ce qu'**elle comprend une chambre (72, 96) contenant une tige (80, 62) reliée rigidement au piston (60) de la vanne (56) et s'étendant coaxialement à ce piston (60), la chambre (72, 96) ayant un orifice d'entrée (82, 98) relié aux moyens d'alimentation en fluide sous pression et un orifice de sortie (84) masqué par la tige (80, 62) quand le piston (60) est en position initiale et démasqué quand le piston (60) est en position finale, l'orifice de sortie (84, 100) étant relié au capteur de pression (94).

3. Vanne selon la revendication 2, **caractérisée en ce que** la tige (62) contenue dans la chambre (96) est la tige (62) reliée à l'organe mobile et porte un élément obturateur (102) précité formé par une collerette annulaire de la tige (62) à l'intérieur de la chambre (96).

4. Vanne selon la revendication 2, **caractérisée en ce que** la tige (80) contenue dans la chambre (72) s'étend depuis le piston (60) à l'opposé de la tige (62) relié à l'organe mobile.

5. Vanne selon l'une des revendications 2 à 4, **caractérisée en ce que** la chambre (72, 96) est à l'extérieur du corps creux (58) contenant le piston (60) et est portée par une paroi de fond (68, 74) du corps creux (58).

6. Vanne selon la revendication 1, **caractérisée en ce que** la conduite de fluide comprend le corps creux (58) dont le piston (60) forme un élément de séparation étanche entre un orifice (64) du corps creux relié aux moyens d'alimentation en fluide sous pression et un orifice (104) du corps creux relié au capteur de pression (94), ces deux orifices du corps creux étant reliés l'un à l'autre quand le piston (60) est au voisinage de sa position finale.

7. Turbomachine, telle qu'un turboréacteur d'avion, **caractérisée en ce qu'**elle comprend au moins une vanne selon l'une des revendications précédentes pour la commande d'un jeu en sommet d'aubes de turbine.

8. Turbomachine selon la revendication 7, **caractérisée en ce que** les moyens d'alimentation sont reliés à des moyens de prélèvement d'air sous pression sur un étage d'un compresseur, par exemple haute-pression, et **en ce que** le capteur de pression (94) est positionné au voisinage d'une soufflante à l'extrémité amont de la turbomachine.

9. Procédure de détection du blocage du piston (60) dans une vanne (56) selon l'une des revendications 1 à 6, **caractérisée en ce qu'**elle comprend les étapes consistant à :
a) alimenter le corps creux (58, 106) en fluide à une pression inférieure à la pression donnée de déplacement du piston (60) ;
b) comparer la valeur de pression mesurée par le capteur (94) à la pression d'alimentation du corps creux (58, 106) et en déduire si le piston (60) est bloqué en position d'ouverture ;
c) si la pression mesurée par le capteur (94) est nulle, augmenter la pression d'alimentation du corps creux (58, 106) au moins jusqu'à la pression donnée de déplacement du piston ;
d) comparer la nouvelle valeur de pression mesurée par le capteur de pression à la pression d'alimentation du corps creux (58, 106) et en déduire si le piston (60) est bloqué en position de fermeture.

## Patentansprüche

1. Ventil (56), enthaltend einen Kolben (60), der in einem Hohlkörper (8, 106) gleitbeweglich gelagert ist, eine fest mit dem Kolben (60) verbundene Stange (62), die dazu bestimmt ist, mit einem beweglichen Glied verbunden zu werden, Versorgungsmittel zum Versorgen des Hohlkörpers mit einem Druckmittel zum Verlagern des Kolbens (60) in dem Hohlkörper (58) zwischen einer Ausgangsstellung und einer Endstellung, und Rückstellmittel zum Rückstellen des Kolbens (60) in die Ausgangsstellung, wenn der Druck im Druckmittel geringer als ein gegebener Druck ist, enthaltend Erfassungsmittel zum Erfassen der Stellung des Kolbens (60), **dadurch gekennzeichnet, dass** diese Erfassungsmittel ein Verschlussteil (80, 102, 60) aufweisen, das verstellfest mit dem Kolben (60) verbunden und in einer Druckmittelleitung zwischen zwei Stellungen, einer Öffnungs- und einer Schließstellung, verstellbar gelagert ist, wobei die Druckmittelleitung an einem Ende mit den Versorgungsmitteln zum Versorgen des Hohlkörpers mit Druckmittel und an dem anderen Ende mit einem Drucksensor (94) verbunden ist, der ein für die Stellung des Kolbens des Ventils repräsentatives Ausgangssignal erzeugt.

2. Ventil nach Anspruch 1, **dadurch gekennzeichnet, dass** es eine Kammer (72, 96) aufweist, die eine starr mit dem Kolben (60) des Ventils (56) verbundene Stange (80, 62) aufweist und sich koaxial zu diesem Kolben (60) erstreckt, wobei die Kammer (72, 96) eine Einlassöffnung (82, 98) aufweist, die mit den Versorgungsmitteln zur Versorgung mit Druckmittel verbunden ist, sowie eine Auslassöffnung (84), die von der Stange (80, 62) dann verdeckt wird, wenn der Kolben (60) in der Ausgangsstellung ist, und dann freigegeben wird, wenn der Kolben (60) in der Endstellung ist, wobei die Auslassöffnung (84, 100) mit dem Drucksensor (94) verbunden ist.

3. Ventil nach Anspruch 2, **dadurch gekennzeichnet, dass** die in der Kammer (96) enthaltene Stange (62) diejenige Stange (62) ist, die mit dem beweglichen Glied verbunden ist und ein vorgenanntes Verschlussteil (102) trägt, das aus einem ringförmigen Kragen der Stange (82) innerhalb der Kammer (96) gebildet ist.

4. Ventil nach Anspruch 2, **dadurch gekennzeichnet, dass** die in der Kammer (72) enthaltene Stange (80) sich ausgehend von dem Kolben (60) auf der entgegengesetzten Seite der Stange (62) erstreckt, die mit dem beweglichen Glied verbunden ist.

5. Ventil nach einem der Ansprüche 2 bis 4, **dadurch gekennzeichnet, dass** die Kammer (72, 96) sich außerhalb des den Kolben (60) enthaltenden Hohlkörpers (58) befindet und von einer Rückwand (68, 74) des Hohlkörpers (58) abgestützt wird.

6. Ventil nach Anspruch 1, **dadurch gekennzeichnet, dass** die Druckmittelleitung den Hohlkörper (58) aufweist, dessen Kolben (60) ein dichtes Trennelement zwischen einer mit den Versorgungsmitteln zum Versorgen mit Druckmittel verbundenen Öffnung (64) des Hohlkörpers und einer mit dem Drucksensor (94) verbundenen Öffnung (104) des Hohlkörpers bildet, wobei diese beiden Öffnungen des Hohlkörpers dann miteinander verbunden sind, wenn der Kolben (60) benachbart zu seiner Endstellung liegt.

7. Turbomaschine bzw. Turbinentriebwerk, wie etwa Turbostrahltriebwerk für Flugzeuge, **dadurch gekennzeichnet, dass** sie bzw. es zumindest ein Ventil nach einem der vorangehenden Ansprüche zum Steuern eines Spiels am Scheitel von Turbinenschaufeln aufweist.

8. Turbomaschine bzw. Turbinentriebwerk nach Anspruch 7, **dadurch gekennzeichnet, dass** die Versorgungsmittel mit Mitteln zum Entnehmen von Druckluft an einer Stufe eines Kompressors verbunden sind, beispielsweise unter Hochdruck, und dass der Drucksensor (94) benachbart zu einem Gebläse am stromaufwärtigen Ende der Turbomaschine bzw. des Turbinentriebwerks positioniert ist.

9. Verfahren zum Erfassen des Klemmens des Kolbens (60) in einem Ventil (56) nach einem der Ansprüche 1 bis 6, **dadurch gekennzeichnet, dass** es die nachfolgenden Schritte umfasst:
a) Versorgen des Hohlkörpers (58, 106) mit einem Druckmittel, dessen Druck geringer als der gegebene Verlagerungsdruck des Kolbens (60) ist;
b) Vergleichen des von dem Sensor (94) gemessenen Druckwertes mit dem Versorgungsdruck des Hohlkörpers (58, 106) und davon Ableiten, ob der Kolben (60) in der Öffnungsstellung klemmt;
c) wenn der von dem Sensor (94) gemessene Druck null beträgt, Erhöhen des Versorgungsdrucks des Hohlkörpers (58, 106) zumindest bis auf den gegebenen Verlagerungsdruck des Kolbens;
d) Vergleichen des von dem Drucksensor gemessenen neuen Druckwertes mit dem Versorgungsdruck des Hohlkörpers (58, 106) und davon Ableiten, ob der Kolben (60) in der Öffnungsstellung klemmt.

## Claims

1. Valve (56) comprising a piston (60) slidably mounted in a hollow body (8, 106), a rod (62) rigidly connected to the piston (60) and intended to be connected to a movable member, means for supplying the hollow body with pressurized fluid for moving the piston (60) in the hollow body (58) between an initial position and a final position and means for returning the piston (60) to the initial position when the fluid pressure is less than a given pressure, comprising means for detecting the position of the piston (60), **characterized in that** said detection means comprise a shut-off element (80, 102, 60) which moves as one with the piston (60) and is mounted such that it can move in a fluid passage between two positions, open and closed, of the fluid passage, the fluid passage being connected via one end to the means for supplying the hollow body with pressurized fluid and via another end to a pressure sensor (94) generating an output signal representative of the position of the piston of the valve.

2. Valve according to claim 1, **characterized in that** it comprises a chamber (72, 96) containing a rod (80, 62) rigidly connected to the piston (60) of the valve (56) and extending coaxially with the piston (60), the chamber (72, 96) having an inlet port (82, 98) connected to the pressurized fluid supply means and an outlet port (84) concealed by the rod (80, 62) when the piston (60) is in the initial position and revealed when the piston (60) is in the final position, the outlet port (84, 100) being connected to the pressure sensor (94).

3. Valve according to claim 2, **characterized in that** the rod (62) contained in the chamber (96) is the rod (62) connected to the movable member and bears a shut-off element (102) mentioned above formed by an annular collar of the rod (62) inside the chamber (96).

4. Valve according to claim 2, **characterized in that** the rod (80) contained in the chamber (72) extends from the piston (60) opposite the rod (62) connected to the movable member.

5. Valve according to any of claims 2 to 4, **characterized in that** the chamber (72, 96) is outside the hollow body (58) containing the piston (60) and is supported by a rear wall (68, 74) of the hollow body (58).

6. Valve according to claim 1, **characterized in that** the fluid passage comprises the hollow body (58) wherein the piston (60) acts as a tight separating element between a port (64) of the hollow body connected to the pressurized fluid supply means and a port (104) of the hollow body connected to the pressure sensor (94), these two ports of the hollow body being connected to each other when the piston (60) is in the vicinity of the final position thereof.

7. Turbine engine, such as an aircraft turbojet, **characterized in that** it comprises at least one valve according to any of the above claims for controlling a clearance at the tip of turbine blades.

8. Turbine engine according to claim 7, **characterized in that** the supply means are connected to means for extracting pressurized air on a stage of a compressor, for example high-pressure, and the pressure sensor (94) is positioned in the vicinity of a fan at the upstream end of the turbine engine.

9. Procedure for detecting jamming of the piston (60) in a valve (56) according to any of claims 1 to 6, **characterized in that** it comprises steps consisting of:
a) supplying the hollow body (58, 106) with fluid at a pressure less than the given pressure for moving the piston (60);
b) comparing the pressure value measured by the sensor (94) to the supply pressure of the hollow body (58, 106) and inferring whether the piston (60) is jammed in the open position;
c) if the pressure measured by the sensor (94) is zero, increasing the supply pressure of the hollow body (58, 106) at least to the given pressure for moving the piston;
d) comparing the new pressure value measured by the pressure sensor to the supply pressure of the hollow body (58, 106) and inferring whether the piston (60) is jammed in the closed position.
